# EUROPÄISCHE PATENTSCHRIFT

(11) **EP 2 100 112 B1**
(45) Veröffentlichungstag und Bekanntmachung des Hinweises auf die Patenterteilung: **11.03.2015**
(21) Anmeldenummer: 06764159.7
(22) Anmeldetag: 13.07.2006
(51) Int. Cl.: G01K 15/00

(54) **VORRICHTUNG ZUR TEMPERATURMESSUNG**
DEVICE FOR MEASURING TEMPERATURE
DISPOSITIF DE MESURE DE TEMPERATURE

(30) Priorität: 18.08.2005 DE 102005039439
(43) Veröffentlichungstag der Anmeldung: 16.09.2009
(73) Patentinhaber: ENDRESS + HAUSER WETZER GmbH + Co. KG, 87484 Nesselwang (DE)
(72) Erfinder: SCHULZE, Stefan, 79576 Weil Am Rhein (DE)
(74) Vertreter: Andres, Angelika Maria
(86) Internationale Anmeldenummer: PCT/EP2006/064214
(87) Internationale Veröffentlichungsnummer: WO 2007/020140

(56) Entgegenhaltungen:
- DE-A1- 3 521 203
- FR-A- 2 846 743

## Beschreibung

Die Erfindung bezieht sich auf eine Vorrichtung zur Bestimmung und/oder Überwachung mindestens einer Temperatur, mit mindestens einem Temperatursensor. Beispielsweise handelt es sich um die Temperatur eines Mediums, wie z.B. einer Flüssigkeit, eines Schüttguts oder eines Gases. Dabei befindet sich das Medium beispielsweise in einem Behälter oder in Rohr.

Temperatursensoren oder auch Thermometer sind im Stand der Technik bekannt. Eine Problematik besteht darin, dass diese Sensoren im Betrieb in gewissen zeitlichen Abständen und auch in Abhängigkeit von der speziellen Anwendung kalibriert werden müssen. Schwierig gestaltet sich eine Kalibrierung dadurch, dass der Temperatursensor üblicherweise in einer Anlage, z.B. an einem Tank oder an einem Rohr angebaut ist und daher für die Kalibrierung ausgebaut werden muss. Dies impliziert in den meisten Fällen, dass auch der eigentliche Prozess unterbrochen werden muss. So muss z.B. Medium aus einem Behälter abgelassen werden oder das Medium darf ein Rohr nicht durchfließen. Weiterhin wird durch das Ausbauen stets auch eine bestehende Dichtung aufgehoben, welche anschließend nach dem Einbau wieder hergestellt werden muss.

Die Offenlegungsschrift DE 3521203 A1 offenbart einen Gaszähler mit einer Tasche, in welcher ein Temperaturfühler sitz, Zusätzlich zu dem Temperaturfühler kann ein Thermometer für Eichzwecke zur Fehlerermittlung in die Tasche eingeschoben werden.

Ferner offenbart die Veröffentlichung FR-A-2846743 eine Vorrichtung zur Temperaturmessung, die ein temperaturempfindliches Element umfasst, das in ein längliches Schutzelement einführbar ist. In dem Schutzelement ist zudem Platz für das Einführen eines Standard-Sensors vorgesehen, der zur Kalibrierung des temepraturemepfindlichen Elements dient.

auch im eingebauten Zustand möglichst einfach, d.h. vorzugsweise ohne Unterbrechung des Prozesses kalibrieren lässt.

Gemäss der Erfindung ist die Messvorrichtung derartig ausgestaltet, dass mindestens ein Referenztemperatursensor vorgesehen ist, und dass

Eine Ausgestaltung der Vorrichtung der Erfindung sieht vor, dass der Referenztemperatursensor für mindestens einen Temperaturwert und/oder einen Temperaturbereich kalibrierbar ist. Je nach der erforderlichen Art der Kalibrierung, ist der Referenztemperatursensor für zwei, drei, vier oder beliebig viele Temperaturpunkte bzw. kontinuierlich für mehrere Temperaturbereiche kalibrierbar bzw. für die Kalibrierung des Temperatursensors kalibriert. Insbesondere ist der Referenztemperatursensor derartig ausgestaltet und angebracht, dass er unabhängig vom Temperatursensor kalibrierbar ist. Diese Ausgestaltung erlaubt es, einen zuverlässigen Referenztemperatursensor für die Kalibrierung des Temperatursensors zu verwenden. In einer Ausgestaltung ist der Referenztemperatursensor insbesondere eichfähig.

Eine Ausgestaltung der Vorrichtung der Erfindung beinhaltet, dass mindestens eine Steuereinheit vorgesehen ist, welche die Heiz-/Kühleinheit zumindest derartig steuert, dass bestimmte Temperaturen oder zu durchlaufende Temperaturbereiche von der Heiz-/Kühleinheit erzeugt werden. Die Steuereinheit lässt sich daher in einer Kalibrationsphase derartig verwenden, dass sie der Heiz-/Kühleinheit entsprechende Temperaturen oder Temperaturbereiche vorgibt, welche die Heiz-/Kühleinheit dann erzeugt.

Eine Ausgestaltung der Vorrichtung der Erfindung beinhaltet, dass mindestens ein Gehäuse vorgesehen ist, und dass mindestens der Temperatursensor und das Heiz-/Kühleinheit in dem Gehäuse angeordnet sind. Meist befindet sich der Temperatursensor in einem Schutzrohr. Dies dient üblicherweise auch der Fixierung der Messvorrichtung im Anwendungsbereich. In dieser Ausgestaltung befindet sich die Heiz-/Kühleinheit ebenfalls in diesem Gehäuse und steht dort in thermischen Kontakt mit dem Temperatursensor, umgibt ihn also beispielsweise oder ist oberhalb von ihm angebracht.

Eine Ausgestaltung der Vorrichtung der Erfindung beinhaltet, dass der Referenztemperatursensor lösbar in dem Gehäuse angeordnet ist. Somit lässt sich der Referenztemperatursensor aus dem Gehäuse entnehmen und kann beispielsweise außerhalb selbst kalibriert werden. Diese Ausgestaltung erlaubt insbesondere die vom Temperatursensor unabhängige Kalibrierung des Referenztemperatursensors.

Eine Ausgestaltung der Vorrichtung der Erfindung beinhaltet, dass mindestens ein Kopftransmitter vorgesehen ist, dass der Temperatursensor und der Referenztemperatursensor derartig mit dem Kopftransmitter verbunden sind, dass der Kopftransmitter die vom Temperatursensor und vom Referenztemperatursensor gemessenen Daten empfängt, und dass mindestens eine Speichereinheit vorgesehen ist, in welcher die gemessen Daten des Temperatursensors und des Referenztemperatursensors abspeicherbar sind. Eine solche Datenaufzeichnung wird entweder nur während der Kalibrierung vorgenommen oder der Referenztemperatursensor verbleibt in dem Gehäuse und es werden somit die Temperaturdaten redundant gewonnen bzw. in der Speichereinheit hinterlegt. Dies erlaubt es, nachträglich die Messeigenschaften zu überprüfen.

Das Verfahren zur Kalibrierung gemäß der Erfindung lässt sich also wie folgt zusammenfassen: Eine Heiz-/Kühleinheit erzeugt während einer Kalibrierphase bestimmte einstellbare Temperaturen. Diese Temperaturen werden von dem zu kalibrierenden Temperatursensor und einem kalibrierbaren und insbesondere unabhängig vom zu kalibrierenden Temperatursensor kalibrierten Referenztemperatursensor gemessen. Die Messung des Referenztemperatursensor dient zur Überprüfung, welche Temperatur das Heiz-/Kühleinheit effektiv erzeugt. Dies ist insbesondere deshalb wichtig, weil der zu kalibrierende Temperatursensor im eingebauten Zustand verbleibt und weil somit die Prozess- oder Messumgebung beliebige Temperaturen hat bzw. auf die Heiz-/Kühlleistung der Heiz-/Kühleinheit einwirkt. Aus dem Vergleich der gemessenen Temperaturen lässt sich dann der Temperatursensor kalibrieren. Dies ist insbesondere für eine Vielzahl von Temperaturen bzw. für ganze Temperaturbereiche möglich.

Ein zusätzliches Beispiel beinhaltet dass mindestens ein Referenztemperatursensor vorgesehen ist, dass der Temperatursensor und der Referenztemperatursensor derartig ausgestaltet und angeordnet sind, dass sie im Wesentlichen die gleiche Temperatur messen, dass mindestens ein Kopftransmitter vorgesehen ist, dass der Temperatursensor und der Referenztemperatursensor derartig mit dem Kopftransmitter verbunden sind, dass der Kopftransmitter die vom Temperatursensor und vom Referenztemperatursensor gemessenen Daten empfängt, und dass mindestens eine Speichereinheit vorgesehen ist, in welcher die gemessen Daten des Temperatursensors und des Referenztemperatursensors abspeicherbar sind. Dieses Beispiel beinhaltet quasi eine ständige Kalibration. Die Temperaturen werden vom zu kalibrierenden Temperatursensor und vom Referenztemperatursensor gemessen. Die Messdaten werden abgespeichert. Abweichungen über einen gewissen vorgegebenen Toleranzbereich hinaus können bei dieser redundanten Messung jedoch auch sogleich angezeigt und alarmiert werden. Die Daten werden über einen bestimmten Zeitraum oder über das Auftreten eines vorgegebenen Temperaturbereichs hinweg aufgezeichnet und lassen sich anschließend auswerten. Indem also das Messverhalten des Temperatursensors über eine gewisse Zeit bzw. über einen gewissen Temperaturbereich hin aufgezeichnet wird, lassen sich daraus Kalibrationsdaten für den Sensor bestimmen. Der Referenztemperatursensor kann dafür in gewissen Abständen eigenständig und unabhängig vom Temperatursensor kalibriert werden, um sichere Referenzwerte zu erzeugen. In diesem Beispiel werden also im Gegensatz zur Erfindung nicht bestimmte Temperaturen angefahren, sondern diese Temperaturen ergeben sich durch den Prozess bzw. durch das Medium, dessen Temperaturen zu messen ist, selbst.

Die Gemeinsamkeit besteht somit darin, dass ein Referenztemperatursensor zur Anwendung kommt und dass die Messdaten des Temperatursensor und des Referenztemperatursensors zumindest bei einigen Temperaturen verglichen und für die Kalibrierung zur Verfügung stehen. In der Erfindung werden diese Temperaturen mit einer Heiz-/Kühleinheit erzeugt, wohingegen sie in dem genannten Beispiel vom Prozess oder vom Medium selbst kommen.

Eine Ausgestaltung des Beispiels sieht vor, dass der Referenztemperatursensor für mindestens einen Temperaturwert und/oder einen Temperaturbereich kalibrierbar ist. Somit ergeben sich zuverlässige Referenzwerte für die Kalibrierung. Die weiteren Ausführungen oben zum Referenztemperatursensor der Erfindung gelten entsprechend auch hier bei dem Beispiel.

Verbunden ist hiermit die Ausgestaltung, in welcher der Referenztemperatursensor derartig ausgestaltet und angebracht ist, dass er unabhängig vom Temperatursensor kalibrierbar ist. Zur Bedeutung dieser Ausgestaltung siehe ebenfalls oben die Anmerkungen bei der Erfindung.

Eine Ausgestaltung des Beispiels beinhaltet, dass mindestens ein Gehäuse vorgesehen ist, und dass mindestens der Temperatursensor und der Referenztemperatursensor in dem Gehäuse angeordnet sind. Das Gehäuse schützt beispielsweise gegenüber dem Medium oder gegenüber Feuchtigkeit und verhindert auch eine mechanische Beanspruchung der Temperatursensoren.

Eine Ausgestaltung des Beispiels sieht vor, dass der Referenztemperatursensor lösbar in dem Gehäuse angeordnet ist. Diese Ausgestaltung ermöglicht die zumindest temporäre Entnahme des Referenztemperatursensor damit dieser selbständig kalibriert werden kann.

Das Verfahren der Kalibrierung des Temperatursensors gemäß dem Beispiel lässt sich daher derart zusammenfassen: Die Temperatur z.B. eines Mediums wird vom Temperatursensor und vom Referenztemperatursensor gemessen. Die Messdaten werden in einer Speichereinheit abgelegt. Die für die Kalibrierung notwendigen Temperaturen ergeben sich somit aus dem Prozess bzw. aus dem Medium selbst. Nach einer vorgebbaren Zeitdauer oder nach dem Überstreichen eines vorgebbaren Temperaturbereichs werden die Messdaten miteinander verglichen und für die Kalibrierung des Temperatursensors verwendet.

Die Erfindung wird anhand der nachfolgenden Zeichnung näher erläutert. Es zeigt:

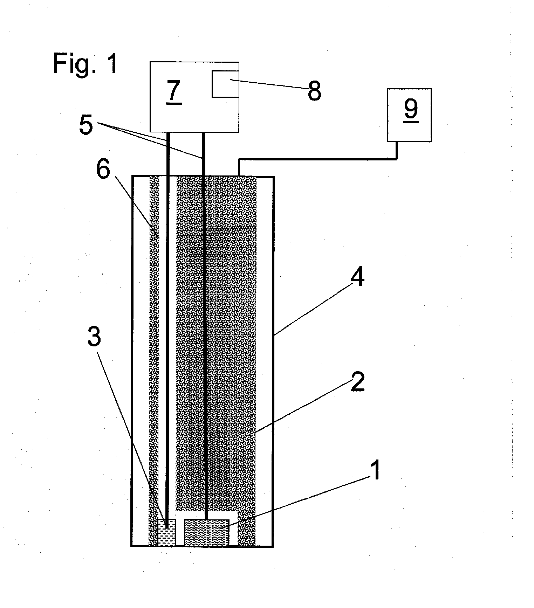

Fig. 1: eine schematische Darstellung eines erfindungsgemäßen Messgerätes.

In der Fig. 1 ist der Temperatursensor 1 des Messgerätes in einem Gehäuse 4 untergebracht, bei welchem es sich hier um ein Schutzrohr handelt. In thermischer Verbindung mit dem Temperatursensor 1 befindet sich das Heiz-/Kühlelement 2, welches von der Steuereinheit 9 gesteuert wird. Die derartig eingestellten Temperaturen wirken auch auf den Referenztemperatursensor 3, welcher hier über den Schacht 6 aus dem Gehäuse 4 entnehmbar und so selbst und unabhängig vom zu kalibrierenden Temperatursensor 1 kalibriert wird. Sowohl der Temperatursensor 1 als auch der Referenztemperatursensor 3 sind hier über elektrische Anschlüsse 5 mit einem Kopftransmitter 7 verbunden. Dieser empfängt die Messdaten, z.B. die Widerstandwerte, falls es sich um temperaturabhängige Widerstandselemente handelt, und bestimmt daraus die gemessenen Temperaturen. Die Messdaten werden dann in einer Speichereinheit 8 hinterlegt. Diese Anordnung mit Kopftransmitter 7 und Speichereinheit 8 kann temporär für die Erfindung oder fest installiert für das erwähnte Beispiel sein. Bei dem Beispiel kann somit insbesondere eine Ansteuerung der Heiz-/Kühleinheit 2 entfallen, da die Temperaturen durch das Medium bzw. durch den Prozess selbst angefahren werden.

Bei der Kalibrierung treten beispielsweise nach der Erfindung folgende Schritte auf:

Der kalibrierte Referenztemperatur 3 wird über den Schacht 6 in das Messgerät eingebracht. Die Steuereinheit 9 stellt bestimmte Temperaturen oder zu durchlaufende Temperaturbereiche ein, welche von der Heiz-/Kühleinheit 2 erzeugt werden. Die gemessenen Daten werden hier von einem Kopftransmitter 7 - es können auch zwei getrennte Einheiten zur Datenerfassung verwendet werden - empfangen und in einer Speichereinheit 8 abgelegt. Die gemessenen Daten erlauben sodann die Kalibrierung des Temperatursensor 1.

In dem Beispiel sieht das Verfahren derartig aus: Der Temperatursensor 1 und der Referenztemperatursensor 3 sind beide in dem Gehäuse 4 eingebaut und messen die auftretenden Temperaturen. Diese werden hier von einem Kopftransmitter 7 empfangen und in der Speichereinheit 8 abgelegt. Alternativ kann auch jeweils ein eigener Transmitter mit einer eigenen Speichereinheit vorgesehen sein. Nach einer gewissen Zeit werden die gemessenen Daten ausgelesen, ausgewertet und für die Kalibrierung verwendet.

### Bezugszeichenliste

**Tabelle 1**

| | |
|---|---|
| 1 | Temperatursensor |
| 2 | Heiz-/Kühleinheit |
| 3 | Referenztemperatursensor |
| 4 | Gehäuse |
| 5 | Elektrischer Anschluss |
| 6 | Schacht |
| 7 | Kopftransmitter |
| 8 | Speichereinheit |
| 9 | Steuereinheit |

## Patentansprüche

1. Vorrichtung zur Bestimmung und/oder Überwachung mindestens einer Temperatur,
mit mindestens einem Temperatursensor (1),
wobei
mindestens ein Referenztemperatursensor (3) vorgesehen ist,
**dadurch gekennzeichnet,**
**dass** mindestens eine Heiz-/Kühleinheit (2) vorgesehen ist, welche mit dem Temperatursensor (1) und dem Referenztemperatursensor (3) thermisch gekoppelt ist.

2. Vorrichtung nach Anspruch 1,
**dadurch gekennzeichnet,**
**dass** der Referenztemperatursensor (3) für mindestens einen Temperaturwert und/oder einen Temperaturbereich kalibrierbar ist.

3. Vorrichtung nach Anspruch 1,
**dadurch gekennzeichnet,**
**dass** mindestens eine Steuereinheit (9) vorgesehen ist, welche die Heiz-/Kühleinheit (2) zumindest derartig steuert, dass bestimmte Temperaturen oder zu durchlaufende Temperaturbereiche von der Heiz-/Kühleinheit erzeugt werden 20.

4. Vorrichtung nach mindestens einem der Ansprüche 1,
**dadurch gekennzeichnet,**
**dass** mindestens ein Gehäuse (4) vorgesehen ist,
und
**dass** mindestens der Temperatursensor (1) und das Heiz-/Kühleinheit (2) in dem Gehäuse (4) angeordnet sind.

5. Vorrichtung nach Anspruch 4,
**dadurch gekennzeichnet,**
**dass** der Referenztemperatursensor (3) lösbar in dem Gehäuse (4) angeordnet ist.

6. Vorrichtung nach Anspruch 1,
**dadurch gekennzeichnet,**
**dass** mindestens ein Kopftransmitter (7) vorgesehen ist,
**dass** der Temperatursensor (1) und der Referenztemperatursensor (3) derartig mit dem Kopftransmitter (7) verbunden sind, dass der Kopftransmitter (7) die vom Temperatursensor (1) und vom Referenztemperatursensor (3) gemessenen Daten empfängt,
und
**dass** mindestens eine Speichereinheit (6) vorgesehen ist, in welcher die gemessen Daten des Temperatursensors (1) und des Referenztemperatursensors (3) abspeicherbar sind.

## Claims

1. Unit designed to determine and/or monitor at least one temperature,
with at least one temperature sensor (1),
wherein at least one reference temperature sensor (3) is provided,
**characterized in that**
at least one cooling/heating unit (2) is provided, said cooling/heating unit being thermally coupled with the temperature sensor (1) and the reference temperature sensor (3).

2. Unit as claimed in Claim 1,
**characterized in that**
the reference temperature sensor (3) can be calibrated for at least one temperature value and/or one temperature range.

3. Unit as claimed in Claim 1,
**characterized in that**
at least one control unit (9) is provided which controls the heating/cooling unit (2) at least in such a way that the heating/cooling unit generates certain temperatures or temperature ranges to be passed through.

4. Unit as claimed in at least one of the claims in Claim 1,
**characterized in that**
at least one housing (4) is provided,
and
**in that** at least the temperature sensor (1) and the heating/cooling unit (2) are arranged in the housing (4).

5. Unit as claimed in Claim 4,
**characterized in that**
the reference temperature sensor (3) is detachably arranged in the housing (4).

6. Unit as claimed in Claim 1,
**characterized in that**
at least one head transmitter (7) is provided,
**in that** the temperature sensor (1) and the reference temperature sensor (3) are connected to the head transmitter (7) in such a way that the head transmitter (7) receives the data measured by the temperature sensor (1) and reference temperature sensor (3),
and
**in that** at least one memory unit (6) is provided in which the measured data of the temperature sensor (1) and the reference temperature sensor (3) can be saved.

## Revendications

1. Dispositif destiné à la détermination et/ou la surveillance d'au moins une température,
avec au moins un capteur de température (1),
pour lequel est prévu au moins un capteur de température de référence, **caractérisé en ce**
**qu'**est prévue au moins une unité de chauffage / refroidissement, laquelle est couplée thermiquement avec le capteur de température (1) et le capteur de température de référence (3).

2. Dispositif selon la revendication 1,
**caractérisé en ce**
**que** le capteur de température de référence (3) peut être étalonné pour au moins une valeur de température et/ou une plage de température.

3. Dispositif selon la revendication 1,
**caractérisé en ce**
**qu'**est prévue au moins une unité de commande (9), laquelle commande l'unité de chauffage / refroidissement au moins de telle manière que sont générées des températures déterminées ou des plages de température continues par l'unité de chauffage / refroidissement.

4. Dispositif selon la revendication 1,
**caractérisé en ce**
**qu'**est prévu au moins un boîtier (4),
et
**qu'**au moins le capteur de température (1) et l'unité de chauffage / refroidissement (2) sont disposés dans le boîtier (4).

5. Dispositif selon la revendication 4,
**caractérisé en ce**
**que** le capteur de température de référence (3) est disposé de façon amovible dans le boîtier (4).

6. Dispositif selon la revendication 1,
**caractérisé en ce**
**qu'**est prévu au moins un transmetteur de tête (7),
en ce que le capteur de température (1) et le capteur de température de référence (3) sont reliés avec le transmetteur de tête (7) de telle manière que le transmetteur de tête (7) reçoive les données mesurées par le capteur de température (1) et le capteur de température de référence (3),
et
en ce qu'est prévue au moins une unité de mémoire (6), dans laquelle les données mesurées provenant du capteur de température (1) et du capteur de température de référence (3) peuvent être enregistrées.
